# DEMANDE DE BREVET EUROPEEN

(11) **EP 1 832 470 A1**
(43) Date de publication de la demande: **12.09.2007**
(21) Numéro de dépôt: 07356033.6
(22) Date de dépôt: 06.03.2007
(51) Int. Cl.: B60P 3/34

(54) **Capucine rehaussable pour auto-caravane**

(30) Priorité: 06.03.2006 FR 0650772
(71) Demandeur: Belleville, Patrick, 74600 Seynod (FR)
(72) Inventeur: Belleville, Patrick, 74600 Seynod (FR)
(74) Mandataire: Poncet, Jean-François

(57) **Abrégé**

Capucine réhaussable d'une auto-caravane à cellule d'habitation (2), comportant :
- une partie fixe de capucine (1), solidaire de la cellule d'habitation (2), et ayant deux parois latérales fixes verticales (1a) et une paroi frontale fixe (1b),
- une partie mobile de capucine (3) à parois latérales mobiles verticales (3a) et à paroi frontale mobile (3b), articulée sur la partie fixe de capucine (1) par une articulation postérieure (4) à axe transversal de rotation (I-I) perpendiculaire à la direction d'avancement (5) de l'auto-caravane, pour être déplaçable par rotation entre une position haute et une position basse dans laquelle les parois latérales (3a) et frontale (3b) mobiles viennent à recouvrement des parois latérales (1a) et frontale (1b) fixes correspondantes,

dans laquelle la paroi frontale fixe (1b) de partie fixe de capucine (1) comporte une portion sensiblement cylindrique centrée sur l'axe transversal de rotation (I-I), et une portion d'extrémité (3c) de la paroi frontale mobile (3b) reste en permanence à proximité de la paroi frontale (1b) fixe pendant la rotation de la partie mobile de capucine (3).

## Description

La présente invention a pour objet une capucine réhaussable pour auto-caravane à cellule d'habitation.

Les autos-caravanes généralement connues comportent un châssis motorisé sur lequel est disposée une cellule d'habitation. Cette cellule d'habitation est d'une hauteur supérieure à celle du poste de conduite solidaire du châssis, si bien que les constructeurs de ce type de véhicule ont prévu de prolonger la cellule d'habitation au-dessus du poste de conduite, ce prolongement étant généralement limité au droit de l'avant du véhicule.

Cette partie de la cellule d'habitation qui se trouve au-dessus du poste de conduite est dénommée « capucine ». Son volume est généralement utilisé pour le couchage.

Dans ce genre de véhicule, la hauteur disponible dans la capucine est souvent faible, ce qui conduit le plus souvent les utilisateurs à y faire dormir des enfants.

La hauteur disponible est en effet souvent inférieure à la hauteur nécessaire à la tenue assise d'une personne adulte, ce qui s'avère inconfortable pour la lecture d'un magazine et souvent oppressant pour les personnes atteintes de claustrophobie.

En outre, le volume réduit des capucines classiques fait que l'atmosphère y est souvent étouffante et que les utilisateurs dorment assez mal.

Un dispositif d'extension en hauteur de la capucine d'une auto-caravane est décrit dans le brevet français publié sous le numéro FR 2 653 722.

Ce document enseigne de prévoir une capucine réhaussable pour auto-caravane à cellule d'habitation, comportant une partie fixe de capucine ayant deux parois latérales fixes verticales et une paroi frontale fixe, et comportant une partie mobile de capucine ayant des parois latérales mobiles verticales et une paroi frontale mobile, la partie mobile de capucine étant articulée sur la partie fixe de capucine par une articulation à axe transversal de rotation perpendiculaire à la direction d'avancement de l'auto-caravane. Des moyens d'étanchéité sont disposés entre ladite partie mobile de capucine et ladite partie fixe de capucine. La partie mobile de capucine peut prendre une position basse ou escamotée lorsque l'auto-caravane effectue un trajet, et une position haute ou en saillie lorsque l'auto-caravane est à l'arrêt et que l'on souhaite utiliser le volume de la capucine pour le couchage d'une ou plusieurs personnes.

La capucine proposée dans ce document comporte une paroi frontale rectiligne sensiblement verticale. L'agencement des parois extérieures de la capucine fait que, lorsque la capucine est en position haute ou en saillie, l'utilisation d'un volet rabattable est nécessaire pour venir obstruer une ouverture qui apparaît entre la partie mobile de capucine et la cellule d'habitation. L'étanchéité n'est pas assurée de manière satisfaisante. En outre, le volume intérieur de la capucine ne présente pas une grande habitabilité, du fait notamment de la présence d'un angle saillant entre le volet mobile et la paroi frontale rectiligne de la cellule d'habitation.

Les documents FR 1 482 168 A et US 3, 429, 609 A décrivent chacun une caravane non motorisée, ayant une partie supérieure mobile déplaçable par rotation entre une position haute et une position basse par rapport à une partie inférieure fixe. En position basse, des parois latérales et frontale de la partie supérieure mobile viennent à recouvrement de parois latérales et frontale fixes correspondantes de la partie inférieure fixe. La paroi frontale fixe comporte une portion sensiblement cylindrique centrée sur l'axe transversal de rotation. Une portion d'extrémité de la paroi frontale mobile reste en permanence à proximité de la paroi frontale fixe pendant le déplacement en rotation de la partie mobile de caravane.

Un souci permanent des constructeurs d'auto-caravanes est de réduire au maximum le poids des autos-caravanes pour être en dessous des trois tonnes et demi (en France par exemple) en poids total à charge. Au-delà de cette limite supérieure, le conducteur doit être titulaire d'un permis de conduire poids-lourds, et cela réduit fatalement le marché de ces auto-caravanes.

Pour cela, les cellules d'habitation des véhicules de camping de type caravane ou auto-caravane comportent généralement des parois latérales et supérieure constituées de matériaux minces disposés entre ou plaqués sur des montants et/ou traverses en bois. Les cellules d'habitation, et notamment les capucines d'auto-caravane, présentent ainsi un faible poids, mais au détriment de la rigidité de leurs parois.

Or, les autos-caravanes sont la plupart du temps stationnées sur des terrains non plats et présentant de nombreuses irrégularités. Il en résulte que, si l'on réduit effectivement leur poids, les parois peu rigides de la cellule d'habitation se déforment de façon importante du fait de leur grande taille, en particulier celles de la capucine, ce qui entraîne des déformations ou vrillages des parties fixe et/ou mobile de capucine et des blocages de la partie mobile de capucine par rapport à la partie fixe au cours de ses déplacements entre ses positions haute et basse.

Les documents précités FR 2 653 722, FR 1 482 168 A et US 3,429,609 A ne mentionnent pas cette difficulté, et n'offrent aucun moyen particulier pour assurer à la fois une grande légèreté de structure et un fonctionnement satisfaisant lors des déplacements d'une partie supérieure mobile de structure vers les positions haute et basse.

Un problème proposé par l'invention est ainsi de concevoir une capucine d'auto-caravane qui soit réhaussable, pour obtenir un volume à grande habitabilité, pleinement utilisable par des personnes adultes, en réduisant notamment la présence d'angles saillants et en optimisant la fermeture permanente du volume de cette capucine au moyen de parois rigides.

Simultanément, l'invention cherche à concevoir une capucine réhaussable qui présente à la fois une grande légèreté et une grande rigidité lors de son fonctionnement, pour garantir une étanchéité parfaite et éviter les risque de blocage ou de détérioration du système lors de son fonctionnement.

Pour atteindre ces objets, ainsi que d'autres, l'invention propose une capucine réhaussable d'une auto-caravane à cellule d'habitation, comportant :
- une partie fixe de capucine, solidaire de la cellule d'habitation, et ayant deux parois latérales fixes verticales et une paroi frontale fixe,
- une partie mobile de capucine à parois latérales mobiles verticales et à paroi frontale mobile, articulée sur la partie fixe de capucine par une articulation postérieure à axe transversal de rotation perpendiculaire à la direction d'avancement de l'auto-caravane, pour être déplaçable par rotation entre une position haute et une position basse dans laquelle les parois latérales et frontale mobiles viennent à recouvrement des parois latérales et frontale fixes correspondantes,
dans laquelle :
- la paroi frontale fixe de partie fixe de capucine comporte une portion sensiblement cylindrique centrée sur l'axe transversal de rotation, et dans laquelle une portion d'extrémité de la paroi frontale mobile reste en permanence à proximité de la paroi frontale fixe pendant la rotation de la partie mobile de capucine,
- les moyens d'articulation comprennent des moyens de guidage latéral du déplacement de la partie mobile de capucine par rapport à la partie fixe de capucine.

L'augmentation de volume de la capucine s'effectue par un seul mouvement de rotation de la partie mobile de capucine, mouvement simple qui est rendu possible par la forme cylindrique centrée de la paroi frontale fixe de la partie fixe de capucine. En particulier l'invention autorise l'emploi de parois légères qui ont une structure telle que celles qui sont couramment utilisées dans le domaine des autos-caravanes.

Du fait qu'une portion d'extrémité de la paroi frontale mobile reste en permanence à proximité de la paroi frontale fixe pendant la rotation de la partie mobile de capucine, grâce à la forme cylindrique centrée de la paroi frontale fixe, il est aisé d'assurer l'étanchéité d'un tel système.

Avec un tel système, la partie mobile de capucine peut présenter une paroi frontale mobile bombée comme celles qui sont utilisées le plus souvent dans les autos-caravanes. Une telle forme de la paroi frontale de capucine est en effet souhaitable pour des questions d'aérodynamisme, mais aussi d'habitabilité de la capucine. En effet, le volume contenu dans une capucine à paroi frontale arrondie s'avère beaucoup plus logeant et moins limitatif que le volume contenu dans une capucine à paroi frontale plane oblique.

L'utilisation de moyens de guidage latéral évite tout blocage de la partie mobile de capucine par rapport à la partie fixe de capucine lors de ses déplacements entre ses positions haute et basse, et ce sans ajouter un poids significatif à l'auto-caravane.

Selon l'invention, les moyens d'articulation peuvent comprendre des moyens de réglage du jeu latéral lors du déplacement de la partie mobile de capucine par rapport à la partie fixe de capucine.

Les moyens de réglage du jeu latéral entre les parties fixe et mobile de la capucine permettent d'adapter avec précision le dispositif de l'invention à toutes les autos-caravanes dont les cotes, la disposition et la forme des parois ne sont qu'approximatives et sujettes à des variations.

De façon préférée, les moyens de guidage latéral peuvent comprendre, entre les parois latérales respectives des parties fixe et mobile de capucine, un premier rail de guidage solidaire d'une paroi latérale fixe de la partie fixe de capucine et le long duquel se déplace un premier élément roulant, un second rail de guidage solidaire de la paroi latérale mobile correspondante de la partie mobile de capucine et le long duquel se déplace un second élément roulant, les premiers et seconds rails de guidage étant orientés selon des directions différentes, et les premier et second éléments roulants étant liés l'un à l'autre avec capacité de pivotement d'axe transversal.

De tels moyens de guidage sont peu encombrants, peu onéreux et surtout très légers, ce qui n'ajoute pas de poids significatif à l'auto-caravane.

De façon avantageuse, les moyens de réglage du jeu latéral peuvent comprendre une tige filetée transversale reliant entre eux les premier et second éléments roulants et autorisant à la fois le réglage de la distance les séparant et leur pivotement respectif d'axe transversal.

Le réglage du jeu latéral peut ainsi être réalisé de façon simple et est même réalisable par l'utilisateur de l'auto-caravane si nécessaire sans avoir recours à un outillage compliqué.

De préférence, la capucine selon l'invention peut comporter des moyens d'étanchéité disposés entre la partie mobile de capucine et la partie fixe de capucine.

Ces moyens d'étanchéité permettent de mieux isoler le volume intérieur de l'auto-caravane vis-à-vis de l'extérieur, afin de garder la chaleur, d'empêcher les remontées d'humidité et toute intrusion de petits animaux. En outre, ces moyens d'étanchéité sont facilement mis en place du fait de la coopération géométrique des parois fixes et mobiles de la capucine.

Avantageusement, les moyens d'étanchéité peuvent comporter :
- des joints latéraux disposés entre les parois latérales mobiles et les parois latérales fixes respectives, solidaires de la paroi latérale de l'une des parties fixe et mobile de capucine et en frottement contre la paroi latérale correspondante de l'autre des parties fixe et mobile de capucine,
- un joint frontal transversal mobile disposé sur un bord inférieur de la paroi frontale mobile et en frottement contre une face antérieure de la paroi frontale fixe,
- un joint arrière transversal, disposé sur un bord postérieur de la partie mobile de capucine au voisinage de l'axe transversal de rotation, présentant une section transversale en forme de « S », et comprimé entre la partie mobile de capucine et la partie fixe de capucine lorsque la partie mobile de capucine est en position haute.

On réalise ainsi une étanchéité parfaite de la capucine, et ce dans la position haute et dans la position basse de la capucine.

De préférence :
- le joint frontal transversal mobile de la partie mobile de capucine peut venir en contact avec un premier joint transversal fixe de la partie fixe de capucine lorsque la partie mobile de capucine est en position haute,
- le joint frontal transversal mobile de la partie mobile de capucine peut venir en contact avec un second joint transversal fixe de la partie fixe de capucine lorsque la partie mobile de capucine est en position basse.

Avantageusement, la capucine selon l'invention peut comporter :
- des moyens de déplacement pour déplacer la partie mobile de capucine depuis sa position basse vers sa position haute et inversement,
- des moyens de maintien de la partie mobile de capucine dans sa position haute.

Selon un mode de réalisation de l'invention, les moyens de maintien de la partie mobile de capucine dans sa position haute peuvent comprendre des vérins compensateurs d'effort.

Selon un mode de réalisation avantageux de l'invention, les moyens de déplacement peuvent comprendre au moins un moteur à crémaillère, de préférence deux moteurs, chacun solidaire d'une paroi latérale fixe verticale de la partie fixe de capucine au voisinage de la paroi frontale mobile de la partie mobile de capucine, les crémaillères étant solidaires de la partie mobile de capucine.

Un aspect de l'invention et de proposer un véhicule de type auto-caravane comprenant une capucine telle que définie ci-dessus.

D'autres objets, caractéristiques et avantages de la présente invention ressortiront de la description suivante de modes de réalisation particuliers, faite en relation avec les figures jointes, parmi lesquelles :
- la figure 1 est une vue schématique en coupe partielle d'une capucine selon un mode de réalisation de l'invention en position basse ;
- la figure 2 est une vue schématique en coupe partielle de la capucine de la figure 1 en position haute ;
- la figure 3 est une vue schématique en coupe transversale partielle des parois latérales des parties fixe et mobile de capucine ; et
- les figures 4 et 5 sont des vues schématiques en coupe partielle de la cellule d'habitation au niveau de l'articulation entre la partie mobile de capucine et la partie fixe de capucine.

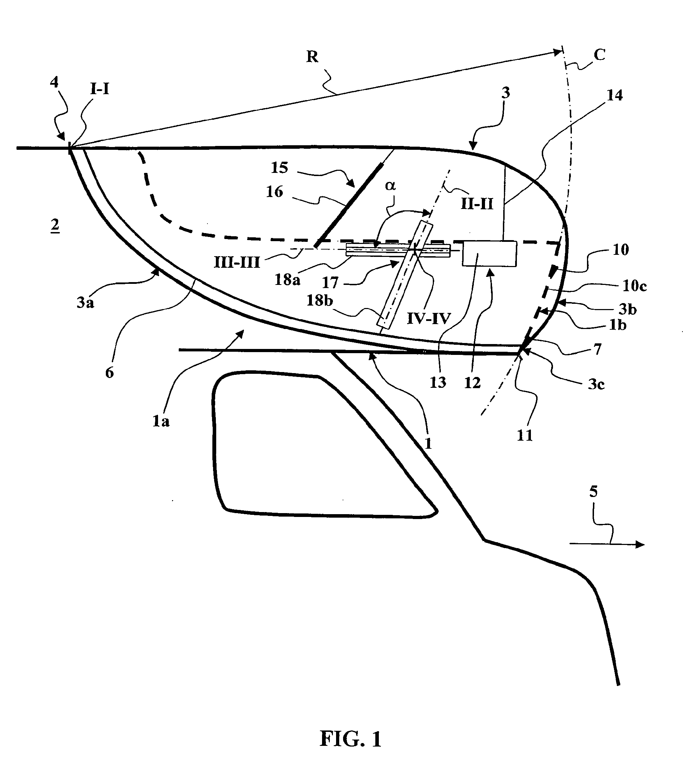

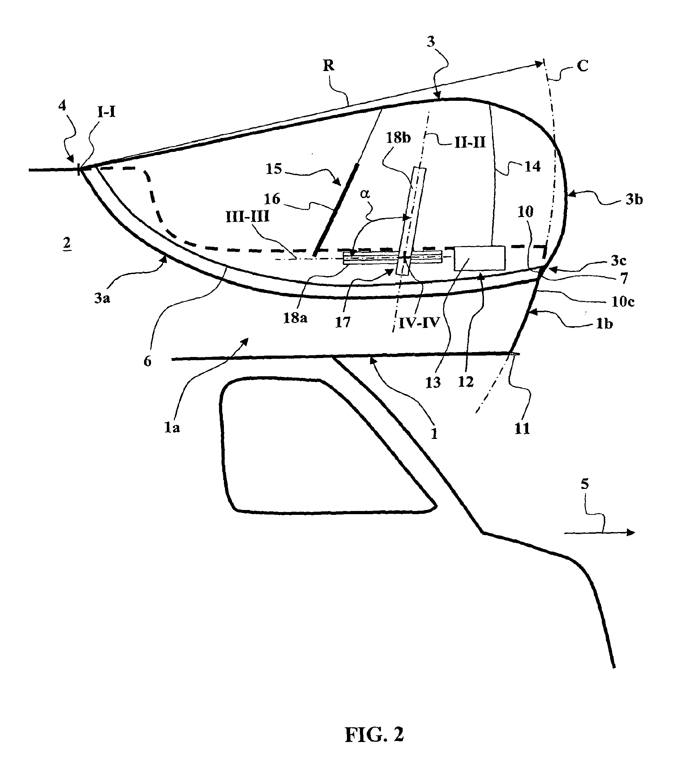

Sur les figures 1 et 2 est représentée une capucine selon un mode de réalisation de l'invention qui comprend une partie fixe de capucine 1, solidaire de la cellule d'habitation 2, et ayant une paroi frontale fixe 1b et deux parois latérales fixes parallèles l'une à l'autre telles que la paroi latérale fixe 1 a.

La capucine comporte également une partie mobile de capucine 3 ayant une paroi frontale mobile 3b et deux parois latérales mobiles verticales telles que la paroi latérale 3a. La partie mobile de capucine 3 est articulée sur la partie fixe de capucine 1 par une articulation postérieure 4 à axe transversal de rotation l-l perpendiculaire à la direction d'avancement 5 de l'auto-caravane.

Sur la figure 1, la paroi mobile de capucine 3 est en position basse, position dans laquelle les parois latérales 3a et frontale 3b mobiles viennent à recouvrement des parois latérales 1 a et frontale 1 b fixes correspondantes.

La paroi frontale fixe 1b de la partie fixe de capucine 1 comporte une portion sensiblement cylindrique, centrée sur l'axe transversal de rotation I-I. Ceci est notamment indiqué par l'arc de cercle C de rayon R et centré sur l'axe transversal de rotation I-I.

Une portion d'extrémité 3c de la paroi frontale mobile 3b reste en permanence à proximité de la paroi frontale fixe 1b pendant la rotation de la partie mobile de capucine 3.

Pour garantir l'étanchéité de la cellule d'habitation 2 et du volume intérieur de la capucine, il est prévu des moyens d'étanchéité disposés entre la partie mobile de capucine 3 et la partie fixe de capucine 1.

Les moyens d'étanchéité comportent notamment des joints latéraux 6 disposés entre les parois latérales mobiles 3a et les parois latérales fixes 1a respectives, solidaires des parois latérales 3a de la partie mobile de capucine 3, et en frottement contre les parois latérales 1a correspondantes de la partie fixe de capucine 1.

On assure ainsi, par contact frottant des joints latéraux 6, une étanchéité satisfaisante entre les parois latérales mobiles 3a et les parois latérales fixes 1 a.

Il est également prévu un joint frontal transversal mobile 7 disposé sur un bord inférieur de la paroi frontale mobile 3b et en frottement permanent contre la face antérieure 10c de la paroi frontale fixe 1 b.

On assure ainsi une étanchéité satisfaisante entre la paroi frontale mobile 3b et la paroi frontale fixe 1 b.

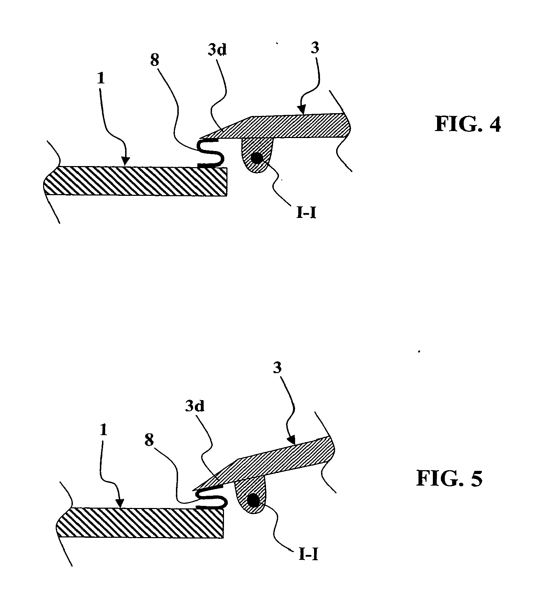

Sur les figures 4 et 5, on voit qu'il est également prévu un joint arrière transversal 8, disposé sur un bord postérieur 3d de la partie mobile de capucine 3 au voisinage de l'axe transversal de rotation I-I. Ce joint arrière transversal 8 présente une section transversale en forme de « S ».

Sur la figure 4, la partie mobile de capucine 3 est en position basse, tandis que sur la figure 5, la partie mobile de capucine 3 est en position haute. Lors de son déplacement vers la position haute, la partie mobile de capucine 3 vient comprimer le joint arrière transversal 8 entre le bord postérieur 3d de la partie mobile de capucine 3 et la partie fixe de capucine 1.

On assure ainsi une étanchéité satisfaisante de la cellule d'habitation 2 et du volume intérieur de la capucine selon tout le bord postérieur 3d de la partie mobile de capucine 3 avec un joint arrière transversal 8 en soufflet qui permet de maintenir une bonne étanchéité malgré les variations de distance entre le bord postérieur 3d de partie mobile de capucine 3 et la partie fixe de capucine 1.

Finalement, les moyens d'étanchéité prévus permettent de garantir une étanchéité satisfaisante de la cellule d'habitation 2 et du volume intérieur de la capucine selon toute la jonction entre la partie mobile de capucine 3 et la partie fixe de capucine 1.

On voit en outre sur la figure 1 qu'il est prévu un premier joint frontal transversal fixe 10 contre lequel le joint frontal transversal mobile 7 de la partie mobile de capucine 3 vient en contact lorsque celle-ci est en position haute (figure 2). Le joint frontal transversal mobile 7 et le premier joint frontal transversal fixe 10 sont ainsi pressés l'un contre l'autre dans la position haute de la partie mobile de capucine 3, ce qui assure le maintien d'une étanchéité satisfaisante quel que soit l'état d'usure du système ou même en cas d'apparition d'un jeu au cours de son fonctionnement.

On distingue également sur les figures 1 et 2 un second joint transversal fixe 11, solidaire de la partie fixe de capucine 1, et contre lequel est pressé le joint frontal transversal mobile 7 de la partie mobile de capucine 3 lorsque celle-ci est en position basse (figure 1).

Ainsi, une étanchéité satisfaisante selon toute la périphérie de la partie mobile de capucine 3 est assurée, que la partie mobile de capucine 3 soit en position haute ou en position basse. Cela permet de garder la chaleur contenue dans la cellule d'habitation 2 de l'auto-caravane et dans le volume intérieur de la capucine. En outre, cela empêche les remontées d'humidité et toute intrusion de petits animaux dans la capucine.

Dans le mode de réalisation illustré sur les figures 1 et 2, la capucine comporte des moyens de déplacement 12 pour déplacer la partie mobile de capucine 3 depuis sa position basse vers sa position haute et inversement. En l'espèce, les moyens de déplacement 12 comprennent deux moteurs 13 à crémaillère 14, chacun solidaire d'une paroi latérale 1 a de la partie fixe de capucine 1 au voisinage de la paroi frontale mobile 3b de la partie mobile de capucine 3, les crémaillères 14 étant solidaires de la partie mobile de capucine 3.

Ces moteurs 13 à crémaillère 14 peuvent notamment être du type de ceux vendus sous la référence commerciale SINTESI 2000, fabriqués par la société ULTRAFLEX CONTROL SYSTEMS.

Ces moteurs 13 à crémaillère 14 présentent en effet un faible encombrement, qui évite de réduire l'espace intérieur utile de la capucine.

En outre, les crémaillères 14 de tels moteurs 13 sont compatibles avec le mouvement de rotation de la partie mobile de capucine 3, en absorbant une légère flexion comme il est représenté sur la figure 2.

Si la flexion des crémaillères 14 est trop importante, on peut prévoir de fixer les moteurs 13 pivotants, selon un axe transversal de pivotement, par rapport aux parois latérales 1 a de la partie fixe de capucine 1.

Les moteurs 13 à crémaillère 14 sont disposés au voisinage de la paroi frontale mobile 3b de la partie mobile de capucine 3, pour communiquer un couple maximal à la partie mobile de capucine 3 pour sa rotation autour de l'axe transversal de rotation I-I.

Toujours sur les figures 1 et 2, on observe que la capucine comporte des moyens de maintien 15 de la partie mobile de capucine 3 dans sa position haute.

Ces moyens de maintien 15 comprennent des vérins compensateurs d'effort 16 qui viennent accompagner le mouvement de rotation de la partie mobile de capucine 3 et soulager le poids de la partie mobile de capucine 3 lors de la poussée des moteurs 13 à crémaillère 14.

Ainsi, une fois que la partie mobile de capucine 3 est en position haute, l'effort résultant du poids de cette partie mobile de capucine 3 est absorbé en quasi-totalité par les vérins compensateurs d'effort 16, et ce afin de ne pas trop solliciter les crémaillères 14 des moteurs 13.

Les moteurs 13 à crémaillère 14 ont une force en traction suffisamment élevée pour ramener la partie mobile de capucine 3 dans sa position basse malgré les forces de poussée exercées par les vérins compensateurs d'effort 16.

Il doit être entendu que l'utilisation de moteurs à crémaillère et de vérins compensateurs d'effort n'est qu'un exemple non limitatif, et que d'autres combinaisons de moyens peuvent être envisagées avec succès sans pour autant sortir du champ de protection de la présente invention.

Il est par exemple possible de remplacer les moteurs 13 à crémaillère 14 par un ou plusieurs vérins électriques ou hydrauliques en vue d'augmenter la capacité de levage du système et sa robustesse. Ces vérins pourront également être fixés pivotants sur les parois latérales 1 a de la partie fixe de capucine 1.

Il est également possible de chercher à combiner les moyens de déplacement 12 et les moyens de maintien 15 au sein d'un seul et unique système mécanique en vue de réduire leur encombrement.

En outre, il est possible d'ajouter des moyens de verrouillage pour verrouiller la partie mobile de capucine 3 dans sa position haute ou dans sa position basse. De tels moyens de verrouillage en position haute peuvent notamment s'avérer utiles dans le cas où une charge est susceptible de s'accumuler sur la partie mobile de capucine 3 comme de la neige par exemple. Ainsi, malgré la masse supplémentaire occasionnée par la présence de la neige accumulée sur la partie mobile de capucine 3, celle-ci restera en position haute sans avoir tendance à descendre en position basse.

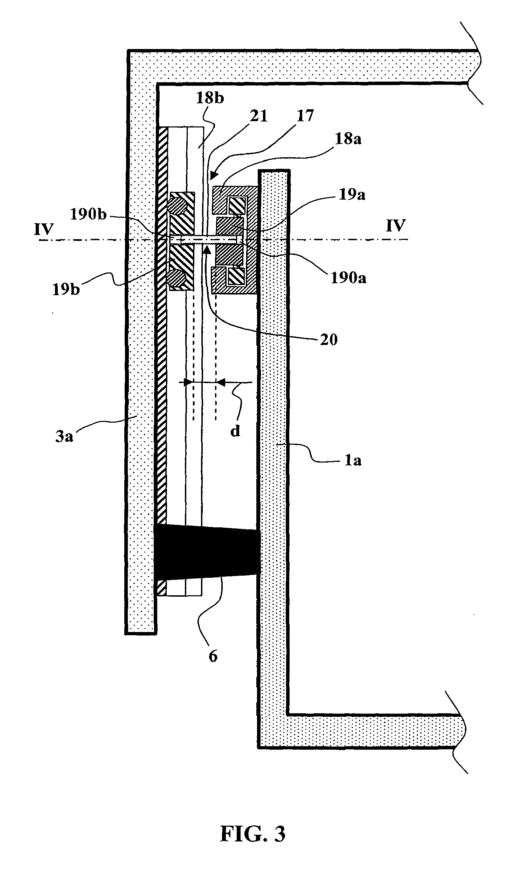

On distingue sur les figures 1 et 2 la présence de moyens de guidage latéral 17 pour guider le déplacement de la partie mobile de capucine 3 par rapport à la partie fixe de capucine 1. Un mode de réalisation des moyens de guidage latéral 17 est détaillé sur la coupe schématique partielle de la figure 3.

Sur cette figure 3, on voit que les moyens de guidage latéral 17 comprennent, entre les parois latérales 1 a et 3a, un premier rail de guidage 18a solidaire de la paroi latérale fixe 1 a et le long duquel se déplace un premier élément roulant 19a. On distingue également un second rail de guidage 18b solidaire de la paroi latérale mobile 3a et le long duquel se déplace un second élément roulant 19b. Les premier et second rails de guidage 18a et 18b sont orientés selon des directions respectives III-III et II-II différentes (figures 1 et 2).

La structure et la disposition des moyens de guidage latéral 17 font que ceux-ci n'absorbent aucun effort dû au poids de la partie mobile de capucine 3, ce qui garantit leur longévité.

Sur la figure 3, on distingue également la présence de moyens de réglage 20 du jeu latéral qui comprennent une tige filetée transversale 21 reliant entre eux les premier et second éléments roulants 19a et 19b. Cette tige filetée transversale 21 autorise le réglage de la distance d séparant les premier et second éléments roulants 19a et 19b par son vissage plus ou moins important dans des alésages taraudés 190a et 190b pratiqués dans les éléments roulants 19a et 19b.

On peut ainsi très facilement régler la distance d au moyen de la tige filetée transversale 21, ce qui permet de corriger la position relative de la partie mobile de capucine 3 par rapport à la partie fixe de capucine 1.

Les distances entre les parois latérales 1 a et 3a des parties fixe 1 et mobile 3 de capucine sont ainsi définies et réglées de façon stricte, pour éviter tout risque de déformation ou vrillage de la partie mobile de capucine 3 qui pourrait entraîner un blocage de la partie mobile de capucine 3 par rapport à la partie fixe de capucine 1 au cours du déplacement.

Le système acquiert ainsi, grâce à la présence des moyens de guidage latéral 17 et des moyens de réglage 20 du jeu latéral, une rigidité importante qui permet un fonctionnement fiable et sûr de la capucine réhaussable selon l'invention.

Lors du déplacement en rotation de la partie mobile de capucine 3, l'angle α (situé entre les directions respectives III-III et II-II définies par les rails de guidage 18a et 18b) n'est pas constant. Il est donc nécessaire d'autoriser le pivotement relatif des éléments roulants 19a et 19b pour permettre au système de fonctionner librement. L'utilisation de la tige filetée transversale 21 comme moyen de réglage 20 du jeu latéral autorise également ce pivotement relatif d'axe transversal IV-IV des éléments roulants 19a et 19b l'un par rapport à l'autre. Ici, l'utilisation d'une tige filetée transversale s'avère économique, simple et robuste.

La présente invention n'est pas limitée aux modes de réalisation qui ont été explicitement décrits, mais elle en inclut les diverses variantes et généralisations contenues dans le domaine des revendications ci-après.

## Revendications

1. - Capucine réhaussable d'une auto-caravane à cellule d'habitation (2), comportant :
- une partie fixe de capucine (1), solidaire de la cellule d'habitation (2), et ayant deux parois latérales fixes verticales (1a) et une paroi frontale fixe (1b),
- une partie mobile de capucine (3) à parois latérales mobiles verticales (3a) et à paroi frontale mobile (3b), articulée sur la partie fixe de capucine (1) par une articulation postérieure (4) à axe transversal de rotation (I-I) perpendiculaire à la direction d'avancement (5) de l'auto-caravane, pour être déplaçable par rotation entre une position haute et une position basse dans laquelle les parois latérales (3a) et frontale (3b) mobiles viennent à recouvrement des parois latérales (1a) et frontale (1b) fixes correspondantes,
**caractérisée en ce que** :
- la paroi frontale fixe (1b) de partie fixe de capucine (1) comporte une portion sensiblement cylindrique centrée sur l'axe transversal de rotation (I-I), et une portion d'extrémité (3c) de la paroi frontale mobile (3b) reste en permanence à proximité de la paroi frontale (1b) fixe pendant la rotation de la partie mobile de capucine (3),
- les moyens d'articulation comprennent des moyens de guidage latéral (17) du déplacement de la partie mobile de capucine (3) par rapport à la partie fixe de capucine (1).

2. - Capucine selon la revendication 1, **caractérisée en ce que** les moyens d'articulation comprennent des moyens de réglage (20) du jeu latéral entre la partie mobile de capucine (3) et la partie fixe de capucine (1).

3. - Capucine selon la revendication 2, **caractérisée en ce que** les moyens de guidage latéral (17) comprennent, entre les parois latérales (la, 3a) respectives des parties fixe (1) et mobile (3) de capucine, un premier rail de guidage (18a) solidaire d'une paroi latérale fixe (1a) de la partie fixe de capucine (1) et le long duquel se déplace un premier élément roulant (19a), un second rail de guidage (18b) solidaire de la paroi latérale mobile (3a) correspondante de la partie mobile de capucine (3) et le long duquel se déplace un second élément roulant (19b), les premiers et seconds rails de guidage (18a, 18b) étant orientés selon des directions respectives (III-III, II-II) différentes, et les premier et second éléments roulants (19a, 19b) étant liés l'un à l'autre avec capacité de pivotement d'axe transversal (IV-IV).

4. - Capucine selon la revendication 3, **caractérisée en ce que** les moyens de réglage (20) du jeu latéral comprennent une tige filetée transversale (21) reliant entre eux les premier et second éléments roulants (19a, 19b) et autorisant à la fois le réglage de la distance (d) les séparant et leur pivotement respectif d'axe transversal (IV-IV).

5. - Capucine selon l'une quelconque des revendications 1 à 4, **caractérisée en ce qu'**elle comporte des moyens d'étanchéité (6, 7, 8) disposés entre la partie mobile de capucine (3) et la partie fixe de capucine (1).

6. - Capucine selon la revendication 5, **caractérisée en ce que** les moyens d'étanchéité comportent :
- des joints latéraux (6) disposés entre les parois latérales mobiles (3a) et les parois latérales fixes (1a) respectives, solidaires de la paroi latérale (1a ; 3a) de l'une des parties fixe (1) et mobile (3) de capucine et en frottement contre la paroi latérale (1a ; 3a) correspondante de l'autre des parties fixe (1) et mobile (3) de capucine,
- un joint frontal transversal mobile (7) disposé sur un bord inférieur de la paroi frontale mobile (3b) et en frottement contre une face antérieure (10c) de la paroi frontale fixe (1 b),
- un joint arrière transversal (8), disposé sur un bord postérieur (3d) de la partie mobile de capucine (3) au voisinage de l'axe transversal de rotation (I-I), présentant une section transversale en forme de « S », et comprimé entre la partie mobile de capucine (3) et la partie fixe de capucine (1) lorsque la partie mobile de capucine (3) est en position haute.

7. - Capucine selon la revendication 6, **caractérisée en ce que** :
- le joint frontal transversal mobile (7) de la partie mobile de capucine (3) vient en contact avec un premier joint transversal fixe (10) de la partie fixe de capucine (1) lorsque la partie mobile de capucine (3) est en position haute,
- le joint frontal transversal mobile (7) de la partie mobile de capucine (3) vient en contact avec un second joint transversal fixe (11) de la partie fixe de capucine (1) lorsque la partie mobile de capucine (3) est en position basse.

8. - Capucine selon l'une quelconque des revendications 1 à 7, **caractérisée en ce qu'**elle comporte :
- des moyens de déplacement (12) pour déplacer la partie mobile de capucine (3) depuis sa position basse vers sa position haute et inversement,
- des moyens de maintien (15) de la partie mobile de capucine (3) dans sa position haute.

9. - Capucine selon la revendication 8, **caractérisée en ce que** les moyens de maintien (15) de la partie mobile de capucine (3) dans sa position haute comprennent des vérins compensateurs d'effort (16).

10. - Capucine selon l'une des revendications 8 ou 9, **caractérisée en ce que** les moyens de déplacement (12) comprennent au moins un moteur (13) à crémaillère (14), de préférence deux moteurs (13), chacun solidaire d'une paroi latérale fixe verticale (1a) de la partie fixe de capucine (1) au voisinage de la paroi frontale mobile (3b) de la partie mobile de capucine (3), les crémaillères (14) étant solidaires de la partie mobile de capucine (3).

11. - Véhicule du type auto-caravane comprenant une capucine selon l'une quelconque des revendications 1 à 10.
